# EUROPEAN PATENT SPECIFICATION

(11) **EP 3 131 000 B1**
(45) Date of publication and mention of the grant of the patent: **08.07.2020**
(21) Application number: 16184060.8
(22) Date of filing: 12.08.2016
(51) Int. Cl.: G06F 3/0488

(54) **METHOD AND ELECTRONIC DEVICE FOR PROCESSING USER INPUT**
VERFAHREN UND ELEKTRONISCHE VORRICHTUNG ZUR VERARBEITUNG EINER BENUTZEREINGABE
PROCÉDÉ ET DISPOSITIF ÉLECTRONIQUE DE TRAITEMENT D'ENTRÉE D'UTILISATEUR

(30) Priority: 12.08.2015 KR 20150114118
(43) Date of publication of application: 15.02.2017
(73) Proprietor: Samsung Electronics Co., Ltd., Suwon-si, Gyeonggi-do 16677 (KR)
(72) Inventor: Lee, Jae Wook, 16697 Suwon-si (KR); Kim, Kyung Jung, 16698 Suwon-si (KR); Kim, Yong Nam, 16951 Yongin-si (KR); Kim, Jin A, 16857 Yongin-si (KR); Cho, Jun Hyung, 16516 Suwon-si (KR)
(74) Representative: Nederlandsch Octrooibureau

(56) References cited:
- US-A1- 2011 246 916
- US-A1- 2012 274 574
- US-A1- 2014 015 782

## Description

This application claims priority to Korean Patent Application Serial No. 10-2015-0114118, which was filed in the Korean Intellectual Property Office on August 12, 2015.

### BACKGROUND OF THE INVENTION

### 1. Field of the Invention

The present disclosure relates generally to processing a user input in an electronic device, and more particularly, to a method and apparatus for processing a user input received through a multilayer display of the electronic device.

### 2. Background of the Invention

In electronic devices, such as smartphones or tablets, supporting touch displays, various functions may be executed through user touch inputs. In many cases, whether to execute a certain function in response to a touch input may be determined based on an application being displayed on the display of an electronic device. For example, when a user provides a pinch to zoom input, if a currently displayed application supports a pinch to zoom input (e.g., a picture application or a map application), a zoom function is executed. However, if the currently displayed application does not support the pinch to zoom input, the input is not processed.

Some electronic devices may execute a specific function in response to an input, regardless of an application or UI being displayed currently. However, in such cases, although the specific function may be executed immediately on a screen, a function to be used in a specific area of the screen may be ignored. If the specific function is defined by an application, it may be difficult for a corresponding application to use this specific function.

Electronic devices using UI known in the prior art are disclosed by US 2011/246916 A1, US 2014/015782 A1, US 2012/274574 A1.

### SUMMARY OF THE INVENTION

Accordingly, aspects of the present disclosure are to address at least the above-mentioned problems and/or disadvantages and to provide at least the advantages described below.

The description is defined by the appended independent claims, further aspects of the invention are defined by the appended dependent claims. In the following detailed description a number of embodiments and examples will be discussed to allow a better understanding of the invention. Embodiments and examples not covered in the claims do not form part of the invention.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a configuration of an electronic device according to an embodiment of the present disclosure;
FIG. 2 illustrates a display screen of an electronic device according to an embodiment of the present disclosure;
FIG. 3 is a flowchart illustrating a method for processing a user input according to an embodiment of the present disclosure;
FIG. 4 is a flowchart illustrating a method for delivering a user input to an application according to an embodiment of the present disclosure;
FIG. 5 illustrates a display screen for processing a user input according to an embodiment of the present disclosure;
FIG. 6 illustrates a display screen for processing a user input according to an embodiment of the present disclosure;
FIG. 7 illustrates a display screen for processing a user input according to an embodiment of the present disclosure;
FIG. 8 is a flowchart illustrating a method for changing a setting of an input layer according to an embodiment of the present disclosure;
FIGs. 9A and 9B illustrate display screens for a setting change of an input layer according to an embodiment of the present disclosure;
FIG. 10 illustrates an electronic device in a network environment according to an embodiment of the present disclosure;
FIG. 11 illustrates an electronic device according to an embodiment of the present disclosure; and
FIG. 12 illustrates a program module according to an embodiment of the present disclosure.

Throughout the drawings, it should be noted that like reference numbers are used to depict the same or similar elements, features, and structures.

### DETAILED DESCRIPTION OF EMBODIMENTS OF THE PRESENT INVENTION

Hereinafter, various embodiments of the present disclosure are disclosed with reference to the accompanying drawings. However, the present disclosure is not intended to be limited by the various embodiments of the present disclosure and it is intended that the present disclosure covers all modifications, equivalents, and/or alternatives of the present disclosure, which fall within the scope of the appended claims.

In the descriptions of the drawings, like reference numerals may refer to like elements.

Terms used herein are used to describe certain embodiments of the present disclosure, but are not intended to limit the scope of other embodiments. The terms of a singular form may include plural forms unless they have a clearly different meaning in the context. Otherwise, all terms used herein may have the same meanings that are generally understood by a person skilled in the art. In general, terms defined in a dictionary should be considered to have the same meanings as the contextual meanings in the related art, and unless clearly defined as such herein, should not be understood differently or as having an excessively formal meaning. Even the terms defined in the present specification are not intended to be interpreted as excluding embodiments of the present disclosure.

Additionally, the terms and words used in the following description and claims are not limited to their dictionary meanings, but are merely used to provide a clear and consistent understanding of the present disclosure. Accordingly, it should be apparent to those skilled in the art that the following description of various embodiments of the present disclosure is provided for illustration purposes only and not for the purpose of limiting the present disclosure as defined by the appended claims and their equivalents.

Herein, the singular forms "a," "an," and "the" include plural referents unless the context clearly dictates otherwise. Thus, for example, reference to "a component surface" includes reference to one or more of such surfaces.

The terms "include," "comprise," "have", "may include," "may comprise" and "may have" used herein indicate disclosed functions, operations, or existence of elements, but do not exclude other functions, operations, or elements.

The expressions "A or B," and "at least one of A and/or B" may indicate (1) at least one A, (2) at least one B, or (3) both at least one A and at least one B.

Terms such as "1st," "2nd," "first," "second," etc., as used herein, may refer to modifying various different elements of various embodiments of the present disclosure, but are not intended to limit the elements. For example, "a first user device" and "a second user device" may indicate different users regardless of order or importance. Accordingly, a first component may be referred to as a second component, and vice versa, without departing from the scope and spirit of the present disclosure.

When a component (e.g., a first component) is referred to as being "operatively or communicatively coupled with/to" or "connected to" another component (e.g., a second component), the first component may be directly connected to the second component, or connected through another component (e.g., a third component). However, when the first component is referred to as being "directly connected to" or "directly accessed" the second component, the third component does not exist between the first component and the second component.

The term "configured to" may be interchangeably used with "suitable for," "having the capacity to," "designed to," "adapted to," "made to," or "capable of' according to context. Further, the term "configured to" does not necessarily indicate "specifically designed to" in terms of hardware, but "a device configured to" in some situations may indicate that the device and another device or part are "capable of" For example, the expression "a processor configured to perform A, B, and C" may indicate a dedicated processor (e.g., an embedded processor) for performing a corresponding operation or a general purpose processor (e.g., a central processing unit (CPU) or application processor (AP)) for performing corresponding operations by executing at least one software program stored in a memory device.

An electronic device according to an embodiment of the present disclosure may include a smartphone, a tablet personal computer (PC), a mobile phone, a video telephone, an electronic book reader, a desktop PC, a laptop PC, a netbook computer, a workstation, a server, a personal digital assistant (PDA), a portable multimedia player (PMP), a Motion Picture Experts Group (MPEG-1 or MPEG-2) Audio Layer 3 (MP3) player, a mobile medical device, a camera, or a wearable device. The wearable device may be an accessory-type device (e.g., a watch, a ring, a bracelet, an anklet, a necklace, glasses, a contact lens, a head-mounted device (HMD)), a textile- or clothing-integrated-type device (e.g., an electronic apparel), a body-attached-type device (e.g., a skin pad or a tattoo), or a bio-implantable-type device (e.g., an implantable circuit)

An electronic device may also be a home appliance, such as a television (TV), a digital video/versatile disc (DVD) player, an audio player, a refrigerator, an air conditioner, a cleaner, an oven, a microwave oven, a washing machine, an air cleaner, a set-top box, a home automation control panel, a security control panel, a television (TV) box (e.g., Samsung HomeSync®, Apple TV®, or Google TV®), a game console (e.g., Xbox® or PlayStation®), an electronic dictionary, an electronic key, a camcorder, or an electronic picture frame

An electronic device may also include various medical devices (e.g., various portable medical measurement devices, such as a blood glucose measuring device, a heart rate measuring device, a blood pressure measuring device, a body temperature measuring device, etc., a magnetic resonance angiography (MRA), a magnetic resonance imaging (MRI), a computed tomography (CT), a scanner, an ultrasonic device, etc.), a navigation device, a global navigation satellite system (GNSS), an event data recorder (EDR), a flight data recorder (FDR), a vehicle infotainment device, electronic equipment for vessels (e.g., a navigation system, a gyrocompass, etc.), avionics, a security device, a head unit for a vehicle, an industrial or home robot, an automatic teller machine (ATM), a point of sales (POS) device of a store, or an Internet of Things (IoT) device (e.g., a light bulb, various sensors, an electric or gas meter, a sprinkler, a fire alarm, a thermostat, a streetlamp, a toaster, exercise equipment, a hot water tank, a heater, a boiler, etc.).

An electronic device may also be a part of furniture or a building/structure, an electronic board, an electronic signature receiving device, a projector, or a measuring instrument (e.g., a water meter, an electricity meter, a gas meter, a wave meter, etc.).

An electronic device may also be a flexible device.

An electronic device may also be one or more combinations of the above-described devices.

An electronic device, however, is not limited to the above-described devices, and may include new electronic devices with the development of new technology.

Herein, the term "user" may refer to a person who uses an electronic device or may refer to a device (e.g., an artificial intelligence electronic device) that uses an electronic device.

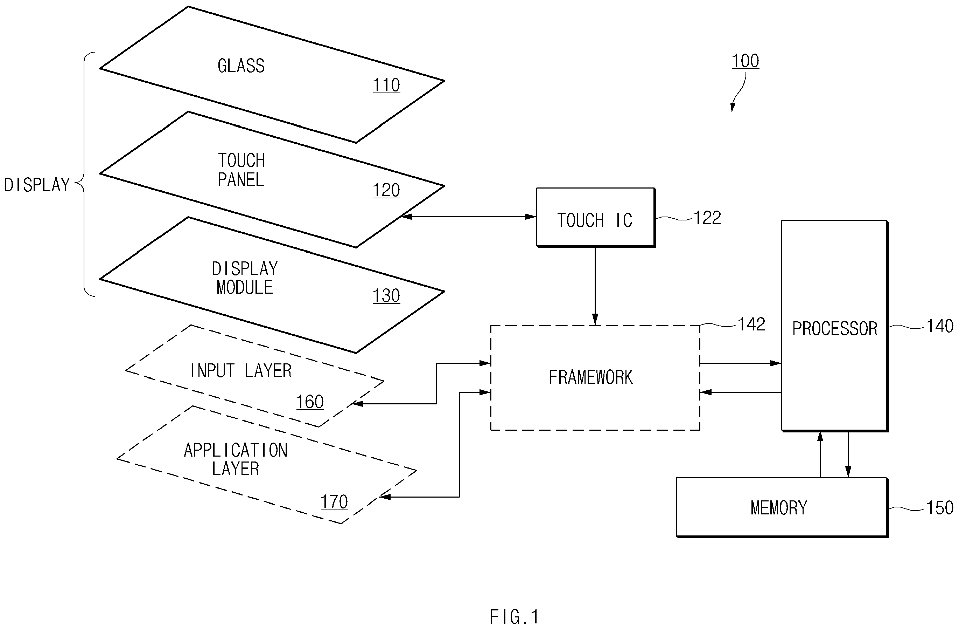

FIG. 1 illustrates a configuration of an electronic device according to an embodiment of the present disclosure.

Referring to FIG. 1, an electronic device 100 includes a display for receiving a touch input. The display includes a glass layer 110, a touch panel 120, and a display module 130 (e.g., an organic light-emitting diode (OLED) type or liquid crystal display (LCD) type display substrate).

The touch panel 120 may receive a touch input or a pen input from a user finger, a stylus, an electronic pen, etc. The touch panel 120 may be understood as an input panel. Although the touch panel 120 for recognizing a touch input is mainly described, other implementation available input methods are not excluded. Additionally or alternatively, the display may include a panel for receiving a variety of inputs, e.g., panels for receiving a user input by using a resistive method, a capacitive method, an infrared method, and an ultrasonic method.

A touch integrated circuit (IC) 122 is electrically connected to the touch panel 120 and determines coordinates, an area, and a sensitivity of a touch input detected from the touch panel 120. The touch IC may make a determination on a touch input detected based on the coordinates and the area. The touch IC 122 may determine the number of touch points input from the touch panel 120. For example, the touch IC 122 may determine whether an occurring touch input is one-point (e.g., one finger touch), two-points (e.g., two fingers), three-points, or four-points touch. Additionally, the touch IC 122 may determine whether a touch input is a palm touch or an input through an electronic pen based on the detected touch area and/or sensitivity.

The touch IC 122 may be replaced with another appropriate input processing circuit according to the type of an input that the electronic device 100 supports. The touch panel 120 and the touch IC 122 may be understood as a touch module. Similarly, all forms of input panels and input processing circuits, which are provided in or supported by the electronic device 100, may be understood as input modules.

The touch IC 122 may provide a detected input to a framework 142. The framework 142 may distinguish an input type of an event (e.g., a user input) detected from the touch IC 122 and provide an input corresponding to the event to the processor 140 or an appropriate layer.

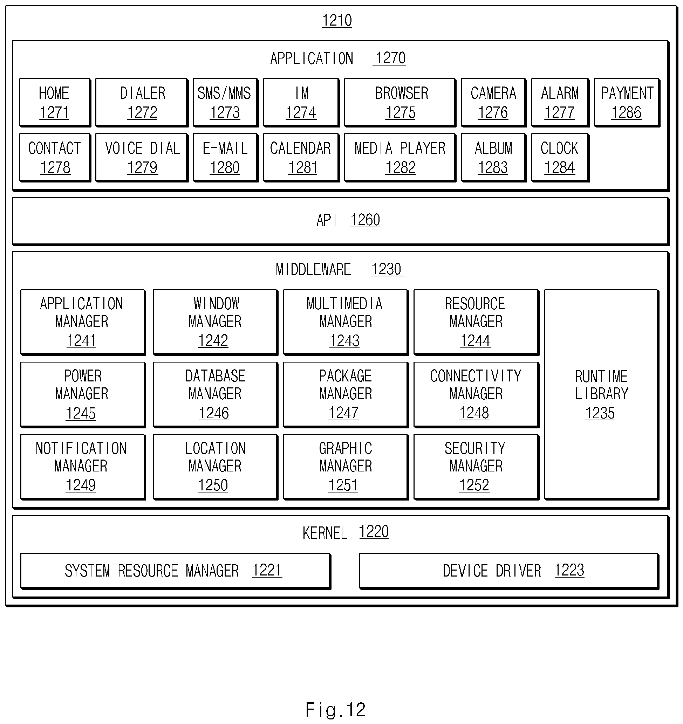

The framework 142 may be understood as an input framework, for processing an input occurring from the electronic device 100, which may be distinguished from a framework for another operation or function. For example, applications may be run on an application framework including various managers (e.g., as illustrated in FIG. 12).

From the viewpoint of processing a user input, the framework 142 may be understood as an input control module.

The framework 142 may be a software module implemented by the processor 140. Instructions for implementing the framework 142 may be stored in the memory 150. For example, an actual calculation of operations described as being performed by the framework 142 may be performed by the processor 140. The processor 140 may implement operating systems (OSs), applications, frameworks, middleware, and libraries for processing various calculations in addition to the framework 142 for processing a user input. However, for convenience of description, it is described that input related processing is processed in the framework 142 and other calculations are processed in the processor 140.

The processor 140 may execute at least one application/program stored in the memory 150. Herein, an application or a program may include an application downloadable from an online market or store and an application executed on the background in addition to an OS, an application, and a service installed in the electronic device 100.

Additionally, while a lock screen or a home screen of the electronic device 100 (e.g., a smartphone) is being displayed, this may be understood as an execution state of a specified application.

The processor 140 may execute an application on an application layer 170, e.g., a first layer. An area where an application is executed (e.g., an area of the first layer) may correspond to part or all of an area in a display. For example, an application may be executed in a first area, except for a status bar at the upper end of a display. Herein, the status bar may correspond to a narrow area at the upper end of a display for displaying a network state, a battery state, etc.

Additionally, the first area may correspond to the entire area of a display or extend to the entire area. For example, when a video is executed on the full screen, the execution screen of a video application may be executed on the entire display area.

Additionally, the processor 140 may execute an input layer 160, e.g., a second layer, for receiving an input on the first layer. The second layer may be above the first layer (e.g., have a higher z-order).

The processor 140 may control the input layer 160 to overlap the application layer 170 and output the overlapped layers to the display module 130. If the input layer 160 is opaque, the overlapped area of the lower-level application layer 170 is not output to the display 130.

Further, the input layer 160 may be semi-transparent. For example, the input layer 160 may be set to have a very high transparency or set to be completely transparent. In order for a user to recognize the input layer 160 (e.g., a second area), each time an input is processed in the input layer 160, the processor 140 may momentarily display (e.g., blink) the boundary or area of the input layer 160.

The electronic device 100 illustrated in FIG. 1 is an exemplary configuration and various components may be added or modified. For example, a component for a vibration function or a sound output function, such as a motor or a speaker, may be included in the electronic device 100.

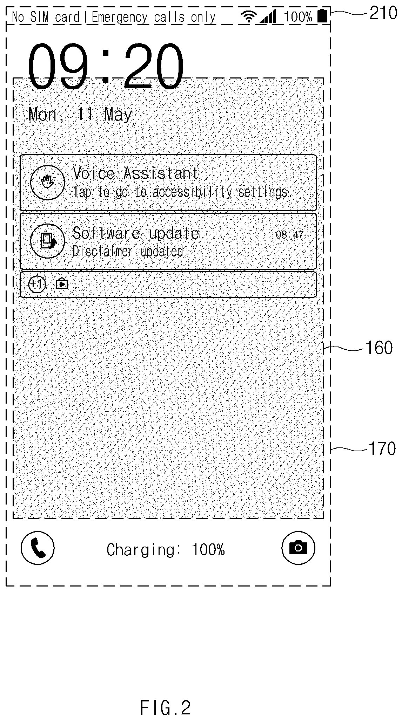

FIG. 2 illustrates display screen of an electronic device according to an embodiment of the present disclosure.

Referring to FIG. 2, a screen includes a status bar 210, an application layer 170, and an input layer 160. The input layer 160 may be set to be semi-transparent. Alternatively, the status bar 210 may be omitted.

Additionally, the screen may output a plurality of applications through a screen split method, and in this case, each application may be executed on respective application layers. That is, the screen may include a plurality of application layers. However, even in this case, the input layer 160 may be maintained as a higher-level layer than the plurality of application layers.

The input layer 160 may be configured with a smaller area than the application layer 170. Additionally, the input layer 160 may be set to be highly transparent or completely transparent (e.g., have a transparency of 100%) in order not to interfere with the display of the application layer 170.

In response to a user input detected in the input layer 160, the processor 140 may perform a pre-defined function, such as a function independent of an application or a function that does not depend on a currently displayed or executed application. Accordingly, an area of the input layer 160 may be an empty area where no content is output. However, when a setting relating to the input layer 160 is changed, a related menu or content may be displayed on the input layer 160.

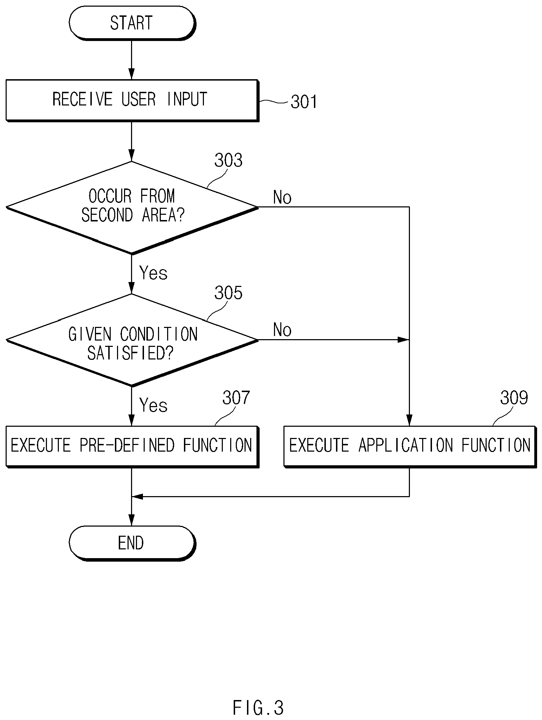

FIG. 3 is a flowchart illustrating a method for processing a user input according to an embodiment of the present disclosure. For example, the method of FIG. 3 will be described below as being performed by the electronic device 100 illustrated in FIG. 1.

Referring to FIG. 3, the electronic device 100 receives a user input in operation 301. For example, the electronic device 100 may receive a user touch input on the glass 110. When the touch input is detected, the touch panel 120 may transmit information relating to the touch input to the touch IC 122, which may provide this information to the framework 142.

In operation 303, the electronic device 100 determines whether the user input occurs in the second area corresponding to the input layer 160. For example, based on a position where the user input occurs, the framework 142 may determine whether the input is received within the second area. If the input position is located within the second area in operation 303, the framework 142 may provide the user input to the input layer 160, and if not (e.g., if the input position is located within the first area), the framework 142 may provide the user input to the application layer 170. That is, if the input position is not located within the second area in operation 303, the processor 140 executes an application function or operation based on the user input on the application layer 170 in operation 309.

The position of the user input may not correspond to the first area or the second area. For example, if a user input swipes a status bar down from the top, because the user input occurs (starts) in the area 210 of FIG. 2, the input position is not the first area or the second area. In this case, a defined function may be executed in a corresponding area. However, because embodiments disclosed in this specification mainly relate to processing inputs occurring in the input layer 160, detailed operations for inputs occurring outside of the input layer 160 are omitted.

When a user input occurs in the second area in operation 303, the electronic device 100 determines whether the user input satisfies a given condition in operation 305. For example, the processor 140 may determine whether the number of touch points in the touch input and a gesture of the touch input satisfy a given condition. That is, the processor 140 may compare the number of simultaneous inputs and an input pattern with a given condition.

For example, if a user input defined in the input layer 160 is a three-point touch (e.g., a three-finger touch) input, but a two-point touch or one-point touch input occurs, then the condition is not met and the input may not be processed in the input layer 160.

If a user input received from the second area satisfies the given condition in operation 305, the electronic device 100 performs a pre-defined function corresponding to the given condition in operation 307. For example, when a three-point touch occurs in the second area, one time (e.g., a tap), which satisfies the given condition in operation 305, the processor 140 may execute a function for reading displayed content from the beginning. For another example, if a three-point touch occurs continuously in the second area, two times (e.g., a double tap), the processor 140 may execute a function for reading from a next item (e.g., the next paragraph or sentence). In addition, the processor 140 may display a notification such as the current time, the current location of the electronic device 100, weather, a remaining battery amount, a schedule, and a missed event according to each specified input or guide the notification through voice as a pre-defined function in operation 307.

Herein, a pre-defined function refers to a function that is not defined by a currently executed or displayed application (e.g., an application being executed in the application layer 170), but is defined by an OS or a software module of the electronic device 100 controlling the input layer 160. That is, a pre-defined function may include a function for content of an application (e.g., a function applicable to content) and a function independent of the application being executed in the application layer 170.

For example, if a function for reading content from the beginning thereof is executed, but an application does not include readable content (e.g., text content), no function is executed or a message that "there is no readable content" may be provided.

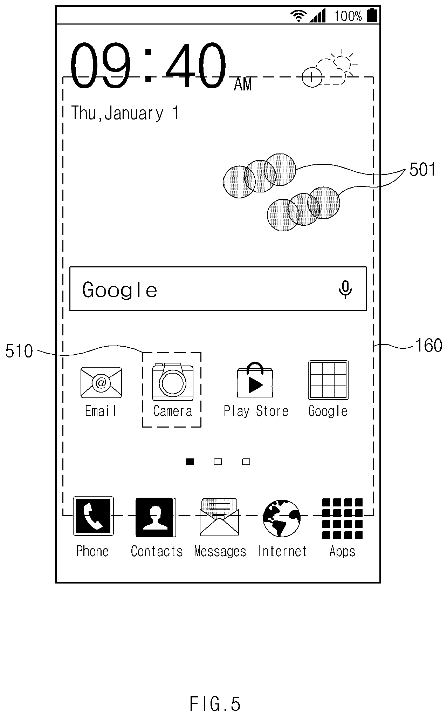

Examples of pre-defined functions relating to operation 307 will be described in more detail below with reference to FIGs. 5, 6, and 7.

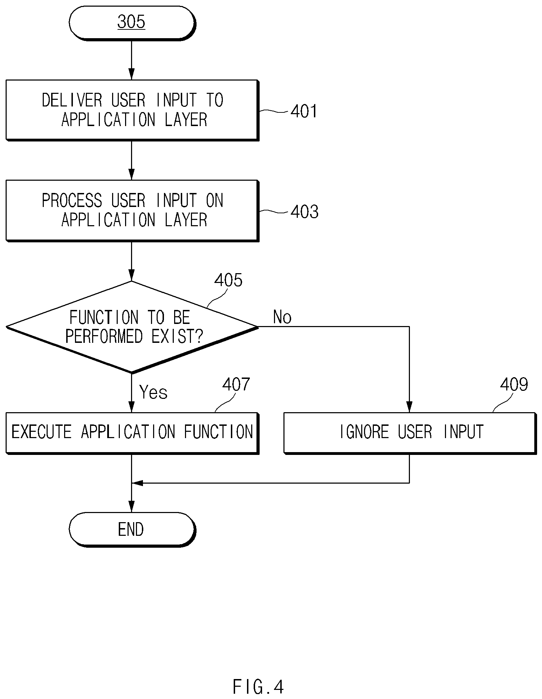

FIG. 4 is a flowchart illustrating a method for delivering a user input to an application according to an embodiment of the present disclosure.

For example, if a given condition is not satisfied in operation 305 of FIG. 3, the method of FIG. 4 may be performed. That is, when an appropriate operation corresponding to a user input received in the second area is not defined, the method illustrated in FIG. 4 may be performed for processing the user input with respect to the application layer 170.

Referring to FIG. 4, in operation 401, the electronic device 100 delivers a user input to the application layer 170. For example, when it is determined that a given condition with respect to a user input is not satisfied, the framework 142 may provide a corresponding input to the application layer 170.

In operation 403, the processor 140 may process a user input provided from the application layer 170. For example, the processor 140 may apply the position and gesture of the user input to an application being executed in the application layer 170.

In operation 405, the processor 140 determines whether there is a function to be performed in an application, which corresponds to the received user input. For example, the processor 140 may determine whether an item is selected from a specific menu of an application by a user input or whether a specific content of an application is enlarged, reduced, or moved by the user input.

FIG. 5 illustrates a display screen for processing a user input according to an embodiment of the present disclosure.

Referring to FIG. 5, the input layer 160 includes a camera icon 510, a conventional method cannot select the camera icon 510 without first moving the input layer 160. However, according to the methods illustrated in FIGs. 3 and 4, even if a user input (e.g., an one-time tap with one finger) for selecting the camera icon 510 is received in the input layer 160, because the user input does not satisfy a given condition in the input layer 160, the user input may be delivered to the application layer 170. Thereafter, the processor 140 may process the user input in the application layer 170 and execute a function for selecting the camera icon 510 (e.g., a function for executing a camera application). Accordingly, even if a semi-transparent or transparent input layer 160 exists on an application layer 170, there is no limitation on an input for executing a function of the application.

Referring again to FIG. 4, when there is a function to be performed, in operation 407, the processor 140 performs a function of an application, e.g., selects the camera icon 510 as described above. However, if there is no function to be performed in operation 405, the processor 140 may ignore a user input in operation 409.

Referring again to FIG. 5, when a user input 501 is obtained within the second area 160, a function corresponding to the user input 501 may be executed. At this point, the processor 140 may output an effect for indicating the second area 160 on the display in addition to the execution of a function corresponding to the user input 501. If the second area 160 is set to be completely transparent or is set to have a very high transparency (e.g., more than 95%), a user may not easily recognize to which area the second area includes. Accordingly, when a function corresponding to the user input 501 is executed, in order for a user to recognize the second area 160, an effect for indicating the second area 160 (e.g., blinking of an area boundary, blurring of an entire area, and a gradual transparency change in area) may be displayed on the display. Alternatively, an effect for indicating the second area 160 may occur in various cases, such as when the electronic device 100 is turned on and/or a function of an application is executed.

In FIG. 5, a user input 501, for example, is a triple tap for two points. The processor 140 may execute a function corresponding to the user input 501. For example, the processor 140 may provide information on the current state of the electronic device 100, such as the current time, a location, weather, a battery state, and missed events. Additionally, the electronic device 100 may output the name of a function corresponding to the user input 501 as voice through a speaker. Accordingly, the electronic device 100 may provide result or state information on what function is performed by a user input and whether an intended function is successfully performed to a user.

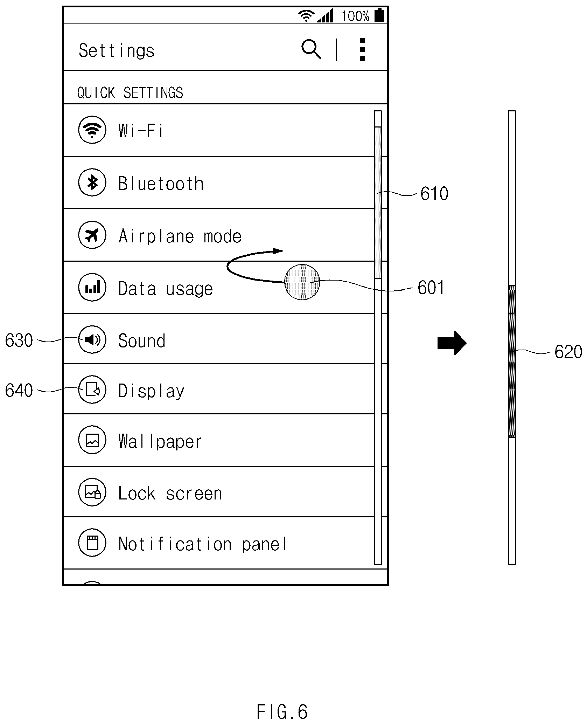

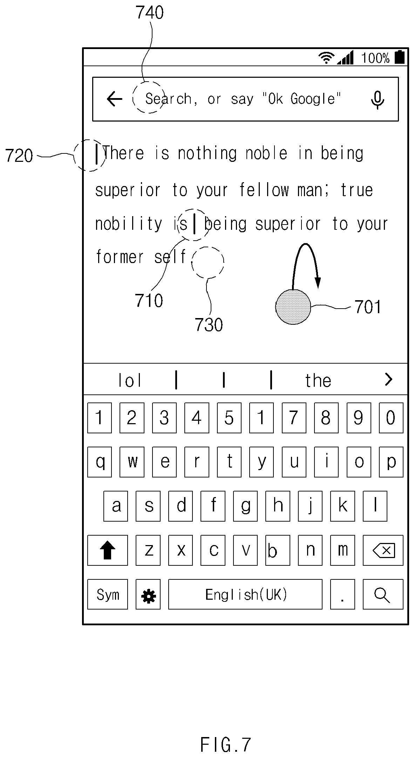

FIGs. 6 and 7 illustrate display screens for processing user inputs according to embodiments of the present disclosure.

Referring to FIG. 6, the electronic device 100 may control a list displayed on a screen according to a user input. In the descriptions of FIG. 6 or 7, a user input occurs in the second area of the input layer 160.

Although not shown in the drawings, the input layer 160 is set in an appropriate area of the screen of FIG. 6 or FIG. 7.

If a swipe user input is received, based on information obtained from the touch IC 122, the processor 140 may determine a direction of the swipe input. For example, the processor 140 may determine whether the user input terminates after moving in one direction, or if the moving direction switches at one point after moving in one direction, e.g., swipes in a V-shape. The processor 140 may then determine whether there is a specified function for each case, execute a corresponding function if there is the specified function, and deliver a corresponding input to an application, if there is no specified function.

For example, when a swipe input 601 moving to the right, after touching and moving to the left occurs, the processor 140 may execute a scroll function by a page unit. For example, when the current scroll bar corresponds to a position 610 and the swipe input 601 occurs, the display screen 600 changes the scroll bar to correspond to a position 620. If the opposite user input occurs (e.g., a swipe input moving to the left, after touching and moving to the right), the scroll bar may move in the opposite direction (e.g., an upper direction).

As another example, in response to the swipe input 601, the processor 140 may execute a function for changing a selection item. For example, when the sound setting 630 is current selected, e.g., highlighted, if the user input occurs, the next menu (i.e., the display setting 640) may be selected.

Referring to FIG. 7, the processor 140 may execute an edit function on a text output on a screen 700 according to a specified user input occurring in the second area of the input layer 160. For example, when a swipe input 701 moving down, after touching and moving up occurs, the processor 140 may move the cursor of the current position 710 to the start position 720 of the current text. If the opposite swipe input occurs in this state, the processor 140 may move the position of the cursor to the end position 730 of the current text.

Although FIGs. 6 and 7 illustrate continuous moving inputs after a touch input by one finger, these are merely exemplary and embodiments of the present disclosure may be modified variously. For example, as an input condition is defined by combining the number of touch inputs, the number of inputs, and an input direction, various functions may be executed independent of an application currently suggested on a display, through the input layer 160.

For example, in order not to overlap an input processed in the application layer 170, a user input that is not usually used, such as a three-point touch (e.g., a touch by using three fingers) or four-point touch input may be defined in the input layer 160. In addition to the three-point touch described with reference to FIG. 3, a triple tap using three-point touch (e.g., three consecutive touches at a short time interval), a double tap and hold (e.g., maintaining a second touch for a predetermined time, without releasing for a predetermined time, after two consecutive touches at a short time interval), an up/down/left/right swipe (or drag), or an input for dragging in a direction forming a specified angle (e.g., 90° or 180°) with respect to a first direction without release after dragging in the first direction may be defined.

Further, the definition above using the three-point touch is exemplary and any form of input may be pre-defined in consideration of a utilization frequency of a function.

For example, conditions may be defined such that the volume of the electronic device is increased by rotating a one-point touch clockwise and is decreased by rotating a one-point touch counterclockwise.

A setting, such as the size or transparency of the input layer 160 may be changed.

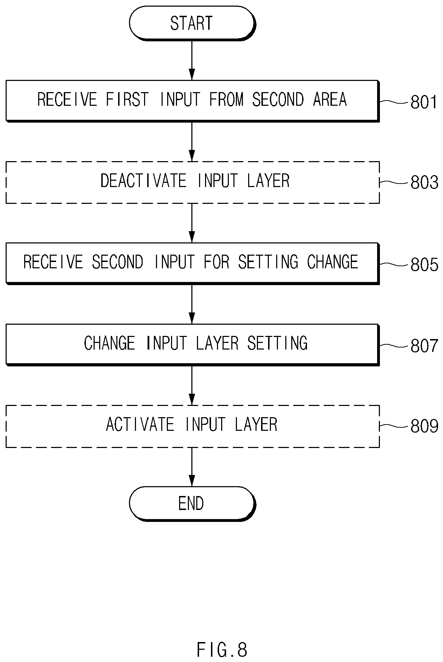

FIG. 8 is a flowchart for illustrating a method for changing a setting of an input layer according to an embodiment of the present disclosure.

Referring to FIG. 8, the electronic device 100 receives a first input in a second area corresponding to the input layer 160 in operation 801. The first input may be an input for activating a setting menu of the input layer 160, which is defined on the input layer 160.

In operation 803, the input layer 160 may be deactivated.

For example, after a setting menu of the input layer 160 is activated, a general selection (e.g., one finger tap and drag) input may be used to change a setting value. Accordingly, when the setting menu is activated, the input layer 160 may be deactivated until a setting is changed. That is, in relation to the example that the input layer 160 is deactivated, when a first input occurs in operation 801, a menu for changing a setting of the input layer 160 may be executed on the application layer 170 in addition to the release of the input layer 160.

Alternatively, operation 803 may be omitted. In this case, the menu for changing the setting of the input layer 160 may be executed on the input layer 160.

In operation 805, the electronic device 100 receives a second input for changing a setting. Herein, the second input may add, delete, and/or change the size of the input layer 160, a position, a transparency, the type of an input recognizable from the input layer 160 (e.g., touch input, pen input, hovering input, etc.), or an input pattern recognizable from the input layer 160.

In operation 807, the electronic device 100 changes a setting of the input layer 160, based on the second input.

In operation 809, after the input layer is deactivated in operation 803, the input layer 160 is re-activated.

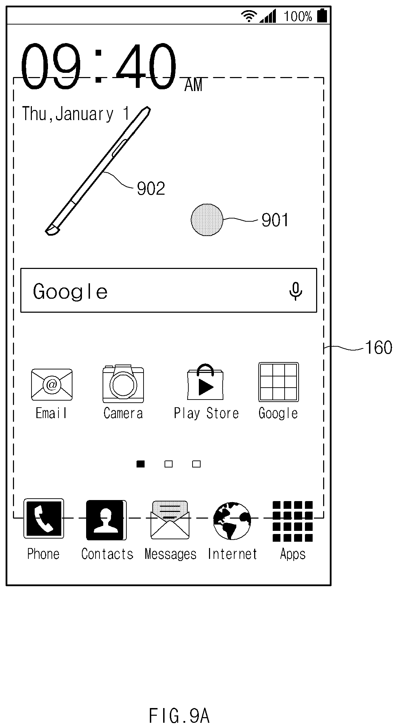

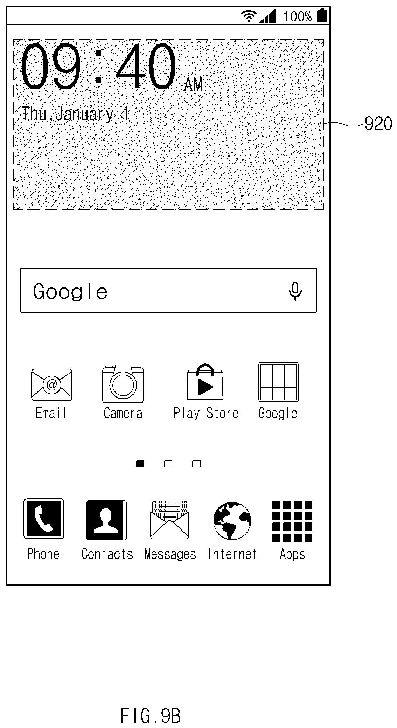

FIGs. 9A and 9B illustrates screens for a setting change of an input layer according to an embodiment of the present disclosure.

Referring to FIG. 9A, a touch input 901 and a pen input 902 using an electronic pen are recognizable on an input layer 160 set on the screen. A user may allow only the touch input 901 or an electronic pen input 902 through a setting change of the input layer 160. Alternatively, the electronic device 100 may detect whether an electronic pen mounted on the electronic device 100 is separated and the input layer 160 may be set to allow an input through the electronic pen 902 to be recognized after the separation is detected.

Referring to FIG. 9B, the size and position of the input layer 160 set in FIG. 9A may be changed to the input layer 920. For example, as the input layer 920 is disposed in an area where simple information (e.g., time, weather, etc.) is provided, not in an area where an application is used frequently, e.g., an area where a search window or icons are disposed, the function utilization of an application and the input function utilization may be configured efficiently.

An area corresponding to the input layer 160 (or the input layer 920) may have different sensitivities. For example, the processor 140 may set an area corresponding to the input layer 160 with a higher sensitivity than an area not corresponding to the input layer 160. For example, when a user's hand or an electronic pen approaches a capacitor in the touch panel 120, its capacitance value is changed. The touch IC 122 may determine whether a user input occurs by detecting such a change in capacitance. When a change in capacitance of more than a first change amount is detected, the processor 140 may process it as a user input occurrence, and when a change in capacitance of more than a second change amount is detected in an area corresponding to the input layer 160, the processor 140 may process it as a user input occurrence. Herein, the second change amount may be set with a smaller value than the first change amount. That is, the processor 140 may sensitively react to an input occurring in the second area.

For example, when a user wears gloves, in order to receive a user input in a wearing state of the gloves, the sensitivity for a touch input may be set to be high. In this case, due to a high sensitivity, a user's unintended touch input (e.g., a touch recognition occurs near the bezel for holding an electronic device) may occur. However, when a sensitivity for the input layer 160 (e.g., the second area formed spaced more than a predetermined distance from the edge) disposed in an appropriate area is set to be high, unintended malfunction may be reduced and user experience may be improved.

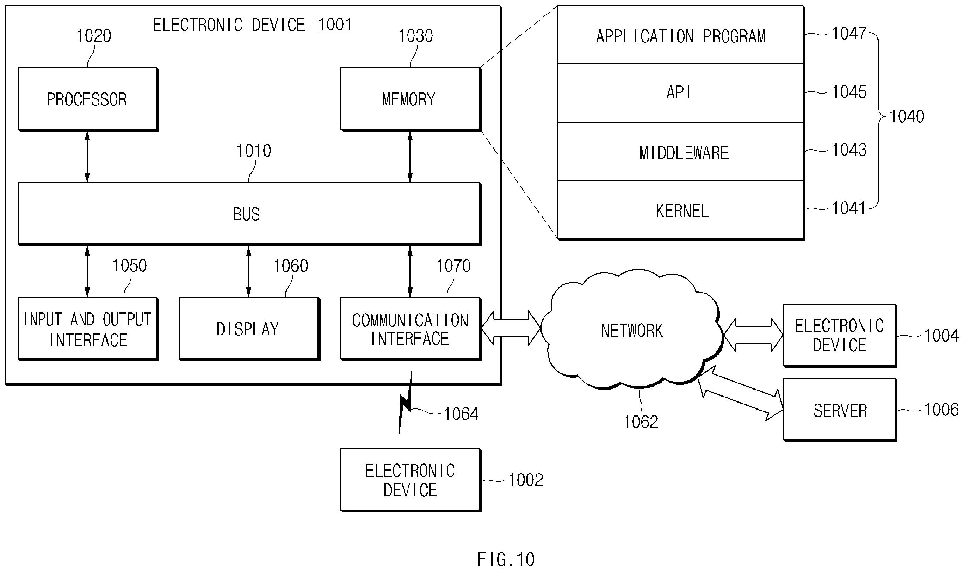

FIG. 10 illustrates an electronic device in a network environment according to an embodiment of the present disclosure.

Referring to FIG. 10, an electronic device 1001 includes a bus 1010, a processor 1020, a memory 1030, an input/output interface 1050, a display 1060, and a communication interface 1070. At least one of the foregoing elements may be omitted or another element may be added to the electronic device 1001.

The bus 1010 may include a circuit for connecting the above-mentioned elements 1010 to 1070 to each other and transferring communications (e.g., control messages and/or data) among the above-mentioned elements.

The processor 1020 may include at least one of a CPU, an AP, or a communication processor (CP). The processor 1020 may perform data processing or an operation related to communication and/or control of at least one of the other elements of the electronic device 1001.

The memory 1030 may include a volatile memory and/or a nonvolatile memory. The memory 1030 may store instructions or data related to at least one of the other elements of the electronic device 1001. The memory 1030 stores software and/or a program 1040. The program 1040 includes a kernel 1041, a middleware 1043, an application programming interface (API) 1045, and an application program (or an application) 1047. At least a portion of the kernel 1041, the middleware 1043, or the API 1045 may be referred to as an OS.

The kernel 1041 may control or manage system resources (e.g., the bus 1010, the processor 1020, the memory 1030, etc.) used to perform operations or functions of other programs (e.g., the middleware 1043, the API 1045, or the application program 1047). Further, the kernel 1041 may provide an interface for allowing the middleware 1043, the API 1045, or the application program 1047 to access individual elements of the electronic device 1001 in order to control or manage the system resources.

The middleware 1043 may serve as an intermediary so that the API 1045 or the application program 1047 communicates and exchanges data with the kernel 1041.

Further, the middleware 1043 may handle one or more task requests received from the application program 1047 according to a priority order. For example, the middleware 1043 may assign at least one application program 1047 a priority for using the system resources (e.g., the bus 1010, the processor 1020, the memory 1030, etc.) of the electronic device 1001. For example, the middleware 1043 may handle the one or more task requests according to the priority assigned to the at least one application, thereby performing scheduling or load balancing with respect to the one or more task requests.

The API 1045, which is an interface for allowing the application 1047 to control a function provided by the kernel 1041 or the middleware 1043, may include, for example, at least one interface or function (e.g., instructions) for file control, window control, image processing, character control, or the like.

The input/output interface 1050 may serve to transfer an instruction or data input from a user or another external device to (an)other element(s) of the electronic device 1001. Further, the input/output interface 1050 may output instructions or data received from (an)other element(s) of the electronic device 1001 to the user or another external device.

The display 1060 may include an LCD, a light-emitting diode (LED) display, an OLED display, a microelectromechanical systems (MEMS) display, or an electronic paper display. The display 1060 may present various content (e.g., a text, an image, a video, an icon, a symbol, etc.) to the user. The display 1060 may include a touch screen, and may receive a touch, gesture, proximity or hovering input from an electronic pen or a part of a body of the user.

The communication interface 1070 may set communications between the electronic device 1001 and a first external electronic device 1002, a second external electronic device 1004, and/or a server 1006. For example, the communication interface 1070 may be connected to a network 1062 via wireless communications or wired communications so as to communicate with the second external electronic device 1004 or the server 1006.

The wireless communications may utilize at least one of cellular communication protocols such as long-term evolution (LTE), LTE-advance (LTE-A), code division multiple access (CDMA), wideband CDMA (WCDMA), universal mobile telecommunications system (UMTS), wireless broadband (WiBro), or global system for mobile communications (GSM).

The wireless communications may also include, for example, a short-range communications 1064. The short-range communications may include at least one of wireless fidelity (Wi-Fi), Bluetooth, near field communication (NFC), magnetic stripe transmission (MST), or GNSS.

The MST may generate a pulse by using electro-magnetic signals according to transmission data, and the pulse may cause magnetic signals. The electronic device 1001 may transmit the magnetic signals to a POS. The POS may detect the magnetic signals using a MST reader and obtain the transmission data by converting the magnetic signals to electronic signals.

The GNSS may include at least one of global positioning system (GPS), global navigation satellite system (GLONASS), BeiDou navigation satellite system (BeiDou), or Galileo, the European global satellite-based navigation system according to a use area or a bandwidth.

The wired communications may include at least one of universal serial bus (USB), high definition multimedia interface (HDMI), recommended standard 232 (RS-232), plain old telephone service (POTS), etc.

The network 1062 may include at least one of telecommunications networks, for example, a computer network (e.g., local area network (LAN) or wide area network (WAN)), the Internet, or a telephone network.

The types of the first external electronic device 1002 and the second external electronic device 1004 may be the same as or different from the type of the electronic device 1001. The server 1006 may include a group of one or more servers.

A portion or all of operations performed in the electronic device 1001 may be performed in one or more of the first electronic device 1002, the second external electronic device 1004, or the server 1006. When the electronic device 1001 should perform a certain function or service automatically or in response to a request, the electronic device 1001 may request at least a portion of functions related to the function or service from the first electronic device 1002, the second external electronic device 1004, or the server 1006, instead of or in addition to performing the function or service for itself. The first electronic device 1002, the second external electronic device 1004, or the server 1006 may perform the requested function or additional function, and may transfer a result of the performance to the electronic device 1001. The electronic device 1001 may use a received result itself or additionally process the received result to provide the requested function or service. To this end, cloud computing technology, distributed computing technology, or client-server computing technology may be used.

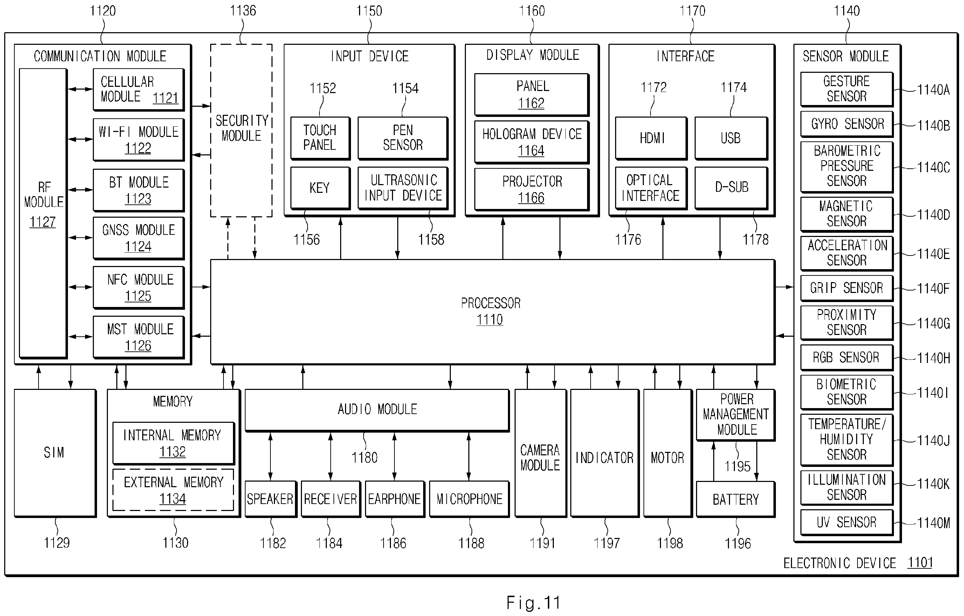

FIG. 11 illustrates an electronic device according to an embodiment of the present disclosure.

Referring to FIG. 11, an electronic device 1101 includes a processor (e.g., AP) 1110, a communication module 1120, a subscriber identification module (SIM) 1, a memory 1130, a sensor module 1140, an input device 1150, a display 1160, an interface 1170, an audio module 1180, a camera module 1191, a power management module 1195, a battery 1196, an indicator 1197, and a motor 1198.

The processor 1110 may run an OS or an application program in order to control a plurality of hardware or software elements connected to the processor 1110, and may process various data and perform various operations. The processor 1110 may be implemented with a system on chip (SoC). The processor 1110 may further include a graphic processing unit (GPU) and/or an image signal processor. The processor 1110 may include at least a portion (e.g., a cellular module 1121) of the elements illustrated in FIG. 11. The processor 1110 may load, on a volatile memory, an instruction or data received from at least one of other elements (e.g., a nonvolatile memory) to process the instruction or data, and may store various data in a nonvolatile memory.

The communication module 1120 includes a cellular module 1121, a Wi-Fi module 1122, a Bluetooth module 1123, a GNSS module 1124 (e.g., a GPS module, a GLONASS module, a BeiDou module, or a Galileo module), an NFC module 1125, an MST module 1125, and a radio frequency (RF) module 1127.

The cellular module 1121 may provide, for example, a voice call service, a video call service, a text message service, or an Internet service through a communication network. The cellular module 1121 may identify and authenticate the electronic device 1101 in the communication network using the subscriber identification module (SIM) 1129 (e.g., a SIM card). The cellular module 1121 may perform at least a part of functions that may be provided by the processor 1110. The cellular module 1121 may include a CP.

Each of the Wi-Fi module 1122, the Bluetooth module 1123, the GNSS module 1124, and the NFC module 1125 may include a processor for processing data transmitted/received through the modules. At least a part (e.g., two or more) of the cellular module 1121, the Wi-Fi module 1122, the Bluetooth module 1123, the GNSS module 1124, and the NFC module 1125 may be included in a single integrated circuit (IC) or IC package.

The RF module 1127 may transmit/receive, for example, communication signals (e.g., RF signals). The RF module 1127 may include a transceiver, a power amp module (PAM), a frequency filter, a low noise amplifier (LNA), an antenna, etc. At least one of the cellular module 1121, the Wi-Fi module 1122, the Bluetooth module 1123, the GNSS module 1124, or the NFC module 1125 may transmit/receive RF signals through a separate RF module.

The SIM 1129 may include an embedded SIM and/or a card containing the subscriber identity module, and may include unique identification information (e.g., an integrated circuit card identifier (ICCID)) or subscriber information (e.g., international mobile subscriber identity (IMSI)).

The memory 1130 includes an internal memory 1132 and an external memory 1134. The internal memory 1132 may include at least one of a volatile memory (e.g., a dynamic RAM (DRAM), a static RAM (SRAM), a synchronous dynamic RAM (SDRAM), etc.), a nonvolatile memory (e.g., a one-time programmable ROM (OTPROM), a programmable ROM (PROM), an erasable and programmable ROM (EPROM), an electrically erasable and programmable ROM (EEPROM), a mask ROM, a flash ROM, a flash memory (e.g., a NAND flash memory, a NOR flash memory, etc.)), a hard drive, or a solid state drive (SSD).

The external memory 1134 may include a flash drive such as a compact flash (CF), a secure digital (SD), a Micro-SD, a Mini-SD, an extreme digital (xD), a MultiMediaCard (MMC), a memory stick, etc. The external memory 1134 may be operatively and/or physically connected to the electronic device 1101 through various interfaces.

A security module 1136, which is a module including a storage space that is higher in security level than the memory 1130, may be a circuit for securing safe data storage and protected execution circumstances. The security module 1136 may be implemented with an additional circuit and may include an additional processor. The security module 1136 may be present in an attachable smart chip or SD card, or may include an embedded secure element (eSE), which is installed in a fixed chip. Additionally, the security module 1136 may be driven in another OS which is different from the OS of the electronic device 1101. For example, the security module 1136 may operate based on a java card open platform (JCOP) OS.

The sensor module 1140 may measure physical quantity or detect an operation state of the electronic device 1101 in order to convert measured or detected information into an electrical signal. The sensor module 1140 includes a gesture sensor 1140A, a gyro sensor 1140B, a barometric pressure sensor 1140C, a magnetic sensor 1140D, an acceleration sensor 1140E, a grip sensor 1140F, a proximity sensor 1140G, a color sensor 1140H (e.g., a red/green/blue (RGB) sensor), a biometric sensor 11401, a temperature/humidity sensor 1140J, an illumination sensor 1140K, and an ultraviolet (UV) sensor 1140M. Additionally or alternatively, the sensor module 1140 may include an olfactory sensor (E-nose sensor), an electromyography (EMG) sensor, an electroencephalogram (EEG) sensor, an electrocardiogram (ECG) sensor, an infrared (IR) sensor, an iris recognition sensor, and/or a fingerprint sensor. The sensor module 1140 may further include a control circuit for controlling at least one sensor included therein. The electronic device 1101 may also include a processor configured to control the sensor module 1140 as a part of the processor 1110 or separately, so that the sensor module 1140 is controlled while the processor 1110 is in a sleep state.

The input device 1150 includes a touch panel 1152, a (digital) pen sensor 1154, a key 1156, and an ultrasonic input device 1158.

The touch panel 1152 may employ at least one of capacitive, resistive, infrared, and ultraviolet sensing methods.

The touch panel 1152 may further include a control circuit. The touch panel 1152 may further include a tactile layer so as to provide a haptic feedback to a user.

The (digital) pen sensor 1154 may include a sheet for recognition which is a part of a touch panel or is separate.

The key 1156 may include, for example, a physical button, an optical button, or a keypad.

The ultrasonic input device 1158 may sense ultrasonic waves generated by an input tool through a microphone 1188 in order to identify data corresponding to the ultrasonic waves sensed.

The display 1160 includes a panel 1162, a hologram device 1164, and a projector 1166. The panel 1162 may be flexible, transparent, and/or wearable. The panel 1162 and the touch panel 1152 may be integrated into a single module.

The hologram device 1164 may display a stereoscopic image in a space using a light interference phenomenon.

The projector 1166 may project light onto a screen so as to display an image. The screen may be disposed in the inside or the outside of the electronic device 1101.

The display 1160 may further include a control circuit for controlling the panel 1162, the hologram device 1164, and/or the projector 1166.

The interface 1170 includes an HDMI 1172, a USB 1174, an optical interface 1176, and a D-subminiature (D-sub) 1178. Additionally or alternatively, the interface 1170 may include a mobile high-definition link (MHL) interface, an SD card/multi-media card (MMC) interface, or an infrared data association (IrDA) interface.

The audio module 1180 may convert a sound into an electrical signal or vice versa. The audio module 1180 may process sound information input or output through a speaker 1182, a receiver 1184, an earphone 1186, and/or the microphone 1188.

The camera module 1191 shoots a still image or a video. The camera module 10091 may include at least one image sensor (e.g., a front sensor or a rear sensor), a lens, an image signal processor (ISP), or a flash (e.g., an LED or a xenon lamp).

The power management module 1195 may manage power of the electronic device 1101. The power management module 1195 may include a power management integrated circuit (PMIC), a charger IC, or a battery gauge. The PMIC may employ a wired and/or wireless charging method. The wireless charging method may include a magnetic resonance method, a magnetic induction method, an electromagnetic method, etc. An additional circuit for wireless charging, such as a coil loop, a resonant circuit, a rectifier, etc., may be further included. The battery gauge may measure a remaining capacity of the battery 1196 and a voltage, current or temperature thereof while the battery is charged. The battery 1196 may include a rechargeable battery and/or a solar battery.

The indicator 1197 may display a specific state of the electronic device 1101 or a part thereof (e.g., the processor 1110), such as a booting state, a message state, a charging state, etc.

The motor 1198 may convert an electrical signal into a mechanical vibration, and may generate a vibration or haptic effect.

A processing device (e.g., a GPU) for supporting a mobile TV may be included in the electronic device 1101. The processing device for supporting a mobile TV may process media data according to the standards of digital multimedia broadcasting (DMB), digital video broadcasting (DVB), MediaFLO™, etc.

Each of the elements described herein may be configured with one or more components, and the names of the elements may be changed according to the type of an electronic device. In various embodiments of the present disclosure, an electronic device may include at least one of the elements described herein, and some elements may be omitted or other additional elements may be added. Further, some of the elements of the electronic device may be combined with each other in order to form one entity, so that the functions of the elements may be performed in the same manner as before the combination.

FIG. 12 illustrates a program module according to an embodiment of the present disclosure.

Referring to FIG. 12, a program module 1210 may include an OS for controlling a resource related to an electronic device and/or various applications running on the OS. For example, the OS may be Android®, iOS®, Windows®, Symbian®, Tizen®, etc.

The program module 1210 includes a kernel 1220, a middleware 1230, an API 1260, and applications 1270. At least a part of the program module 1210 may be preloaded on an electronic device or may be downloaded from an external electronic device.

The kernel 1220 includes a system resource manager 1221 and a device driver 1223. The system resource manager 1221 may perform control, allocation, or retrieval of a system resource. The system resource manager 1221 may include a process management unit, a memory management unit, a file system management unit, or the like. The device driver 1223 may include a display driver, a camera driver, a Bluetooth driver, a shared memory driver, a USB driver, a keypad driver, a Wi-Fi driver, an audio driver, or an inter-process communication (IPC) driver.

The middleware 1230 may provide a function that the applications 1270 require in common, or may provide various functions to the applications 1270 through the API 1260 so that the applications 1270 may efficiently use limited system resources in the electronic device.

The middleware 1230 includes a runtime library 1235, an application manager 1241, a window manager 1242, a multimedia manager 1243, a resource manager 1244, a power manager 1245, a database manager 1246, a package manager 1247, a connectivity manager 1248, a notification manager 1249, a location manager 1250, a graphic manager 1251, a security manager 1252, and a payment manager 1254.

The runtime library 1235 may include a library module that a complier uses to add a new function through a programming language while the application 1270 is running. The runtime library 1235 may perform a function for input/output management, memory management, or an arithmetic function.

The application manager 1241 may mange a life cycle of at least one of the applications 1270.

The window manager 1242 may manage a GUI resource used in a screen.

The multimedia manager 1243 may recognize a format required for playing various media files and may encode or decode a media file using a codec matched to the format.

The resource manager 1244 may manage a resource such as a source code, a memory, or a storage space of at least one of the applications 1270.

The power manager 1245, for example, may operate together with a basic input/output system (BIOS) to manage a battery or power and may provide power information required for operating the electronic device.

The database manager 1246 may generate, search, or modify a database to be used in at least one of the applications 1270.

The package manager 1247 may manage installation or update of an application distributed in a package file format.

The connectivity manger 1248 may manage wireless connection of Wi-Fi, Bluetooth, etc.

The notification manager 1249 may display or notify an event such as message arrival, appointments, and proximity alerts in such a manner as not to disturb a user.

The location manager 1250 may manage location information of the electronic device.

The graphic manager 1251 may manage a graphic effect to be provided to a user or a user interface related thereto.

The security manager 1252 may provide various security functions required for system security or user authentication.

If an electronic device includes a phone function, the middleware 1230 may also include a telephony manager for managing a voice or video call function of the electronic device.

The middleware 1230 may include a middleware module for forming a combination of various functions of the above-mentioned elements. The middleware 1230 may provide a module specialized for each type of an operating system to provide differentiated functions. Further, the middleware 1230 may delete a part of existing elements or may add new elements dynamically.

The API 1260, which may be a set of API programming functions, may be provided in different configurations according to an OS. For example, in certain OSs, one API set may be provided for each platform, and other OSs, at least two API sets may be provided for each platform.

The applications 1270 include a home application 1271, a dialer application 1272, an short message service/multimedia messaging service (SMS/MMS) application 1273, an instant message (IM) application 1274, a browser application 1275, a camera application 1276, an alarm application 1277, a contact application 1278, a voice dial application 1279, an e-mail application 1280, a calendar application 1281, a media player application 1282, an album application 1283, and a clock application 1284. Additionally or alternatively, the applications 1270 may include a health care application (e.g., an application that measures an exercise amount or blood sugar), or environmental information provision application (e.g., an application that provides air pressure, humidity, or temperature information).

The applications 1270 may include an information exchange application for supporting information exchange between the electronic device and an external electronic device. The information exchange application may include, for example, a notification relay application for relaying specific information to the external electronic device or a device management application for managing the external electronic device.

For example, the notification relay application may have a function for relaying, to an external electronic device(, notification information generated in another application (e.g., the SMS/MMS application 1273, the e-mail application 1280, a health care application, an environmental information application, etc.) of the electronic device. Further, the notification relay application may receive notification information from the external electronic device and may provide the received notification information to the user.

The device management application, for example, may manage (e.g., install, delete, or update) at least one function (e.g., turn-on/turn off of the external electronic device itself (or some elements) or the brightness (or resolution) adjustment of a display) of the external electronic device communicating with the electronic device, an application running in the external electronic device, or a service (e.g., a call service, a message service, etc.) provided from the external electronic device.

The applications 1270 may include a specified application (e.g., a healthcare application of a mobile medical device) according to an attribute of the external electronic device. The applications 1270 may include an application received from an external electronic device. The applications 1270 may include a preloaded application or a third-party application downloadable from a server. The names of the elements of the program module 1210 illustrated in FIG. 12 may vary with the type of an OS.

At least a part of the program module 1210 may be implemented with software, firmware, hardware, or a combination thereof. At least a part of the program module 1210, for example, may be implemented (e.g., executed) by a processor. At least a part of the program module 1210 may include a module, a program, a routine, sets of instructions, or a process for performing at least one function.

Herein, the term "module" may represent a unit including one of hardware, software and firmware or a combination thereof. The term "module" may be interchangeably used with the terms "unit", "logic", "logical block", "component" and "circuit". A module may be a minimum unit of an integrated component or may be a part thereof. A module may be a minimum unit for performing one or more functions or a part thereof. A module may be implemented mechanically or electronically. For example, a module may include at least one of an application-specific integrated circuit (ASIC) chip, a field-programmable gate array (FPGA), and a programmable-logic device for performing some operations, which are known or will be developed.

At least a part of devices (e.g., modules or functions thereof) or methods (e.g., operations) according to the above-described various embodiments of the present disclosure may be implemented as instructions stored in a computer-readable storage medium in the form of a program module. When the instructions are performed by a processor (e.g., the processor 1020), the processor may perform functions corresponding to the instructions. The computer-readable storage medium may be, for example, the memory 1030.

A computer-readable recording medium may include a hard disk, a floppy disk, a magnetic medium (e.g., a magnetic tape), an optical medium (e.g., CD-ROM, digital versatile disc (DVD)), a magneto-optical medium (e.g., a floptical disk), or a hardware device (e.g., a ROM, a RAM, a flash memory, etc.). The program instructions may include machine language codes generated by compilers and high-level language codes that can be executed by computers using interpreters. The above-mentioned hardware device may be configured to be operated as one or more software modules for performing operations of various embodiments of the present disclosure and vice versa.

A module or a program module according to various embodiments of the present disclosure may include at least one of the above-mentioned elements, or some elements may be omitted or other additional elements may be added. Operations performed by the module, the program module or other elements according to various iterative or heuristic way. Furthermore, some operations may be performed in another order or may be omitted, or other operations may be added.

According to various embodiments of the present disclosure, by performing a pre-defined function on a user input occurring in a predetermined area, user experience may be improved.

Additionally, even if the user input occurs in the predetermined area, by configuring the input to be delivered to an application, the function execution environment of the application may be maintained.

Additionally, by changing a setting, such as the size or transparency of the predetermined area, user convenience may be improved.

Also, various effects identified directly or indirectly through this specification may be provided.

While the present disclosure has been shown and described with reference to certain embodiments thereof, it will be understood by those skilled in the art that various changes in form and details may be made therein without departing from the scope of the present disclosure. Therefore, the scope of the present disclosure should not be defined as being limited to the embodiments, but should be defined by the appended claims.

## Claims

1. An electronic device comprising:
a display;
an input module configured to receive a user input; and
a processor configured to:
execute an application on a first layer (170) having a first area;
set a second layer (160) having a second area, the second layer being above the first layer;
output the first layer and the second layer on the display, the second layer at least partially overlapping on the first layer; and
if the user input is received in the second area and satisfies a given condition, execute a pre-defined function corresponding to the given condition,
if the user input is received in the second area and does not satisfy the given condition, processing the user input with respect to the application on the first layer,
**characterized in that** the given condition is based on an input pattern.

2. The electronic device of claim 1, wherein the second area has a specified transparency.

3. The electronic device of claim 1, wherein the processor is further configured to output an effect for indicating the second area on the display, if the user input satisfies the given condition.

4. The electronic device of claim 1, wherein the processor is further configured to process the user input with respect to the application, if the user input occurs outside of the second area.

5. The electronic device of claim 1, wherein the pre-defined function includes providing a notification on one of a current time, a location of the electronic device, weather, a remaining amount of a battery of the electronic device, a schedule, and a missed event.

6. The electronic device of claim 1, wherein the pre-defined function includes executing a function on content of the application.

7. The electronic device of claim 6, wherein the function on the content includes executing a text to speech function on text included in the content.

8. The electronic device of claim 1, further comprising a speaker,
wherein the processor is further configured to output a name of the pre-defined function through the speaker when the pre-defined function is executed.

9. The electronic device of claim 1, wherein the pre-defined function includes scrolling a screen of a current display.

10. The electronic device of claim 1, wherein the pre-defined function includes executing an edit function of text of a current display.

11. The electronic device of claim 1, wherein the processor is further configured to provide a setting menu for changing at least one of a size, a location, and a transparency of the second area.

12. The electronic device of claim 1, wherein the processor is further configured to provide a setting menu for changing a type of an input recognizable in the second area.

13. The electronic device of claim 1, wherein the user input includes a touch input, and the given condition includes a number of touches and a pattern of the touch input.

14. A method for processing a user input in an electronic device, the method comprising:
executing an application on a first layer having a first area;
setting a second layer having a second area;
outputting the first layer and the second layer on a display, the second layer overlapping at least a portion of the first layer;
receiving a user input in the second area; and
if the user input satisfies a given condition, executing a pre-defined function corresponding to the given condition,
if the user input is received in the second area and does not satisfy the given condition, processing the user input with respect to the application on the first layer,
**characterized in that** the given condition is based on an input pattern.

## Patentansprüche

1. Elektronische Vorrichtung, die Folgendes umfasst:
ein Display;
ein Eingabemodul, das konfiguriert ist, um eine Benutzereingabe zu empfangen; und
einen Prozessor, der konfiguriert ist zum:
Ausführen einer Anwendung auf einer ersten Schicht (170), die einen ersten Bereich aufweist;
Einstellen einer zweiten Schicht (160), die einen zweiten Bereich aufweist, wobei die zweite Schicht oberhalb der ersten Schicht ist;
Ausgeben der ersten Schicht und der zweiten Schicht auf dem Display, wobei die zweite Schicht mindestens einen Teil der ersten Schicht überlappt; und
wenn die Benutzereingabe in dem zweiten Bereich empfangen wird und eine gegebene Bedingung erfüllt, Ausführen einer vordefinierten Funktion entsprechend der gegebenen Bedingung,
wenn die Benutzereingabe in dem zweiten Bereich empfangen wird und die gegebene Bedingung nicht erfüllt, Verarbeiten der Benutzereingabe in Bezug auf die Anwendung auf der ersten Schicht,
**dadurch gekennzeichnet, dass** die gegebene Bedingung auf einem Eingabemuster basiert.

2. Elektronische Vorrichtung nach Anspruch 1, wobei der zweite Bereich eine bestimmte Durchsichtigkeit hat.

3. Elektronische Vorrichtung nach Anspruch 1, wobei der Prozessor des Weiteren konfiguriert ist, um eine Wirkung zum Anzeigen des zweiten Bereichs auf dem Display auszugeben, wenn die Benutzereingabe die gegebene Bedingung erfüllt.

4. Elektronische Vorrichtung nach Anspruch 1, wobei der Prozessor des Weiteren konfiguriert ist, um die Benutzereingabe in Bezug auf die Anwendung zu verarbeiten, wenn die Benutzereingabe außerhalb des zweiten Bereichs eintritt.

5. Elektronische Vorrichtung nach Anspruch 1, wobei die vordefinierte Funktion das Bereitstellen einer Benachrichtigung eines der Folgenden umfasst: aktueller Zeitpunkt, ein Standort der elektronischen Vorrichtung, Wetter, eine verbleibende Akkumenge der elektronischen Vorrichtung, ein Zeitplan, und ein verpasstes Ereignis.

6. Elektronische Vorrichtung nach Anspruch 1, wobei die vordefinierte Funktion das Ausführen einer Funktion des Inhalts der Anwendung umfasst.

7. Elektronische Vorrichtung nach Anspruch 6, wobei die Funktion des Inhalts das Ausführen einer Text-zu-Sprache-Funktion für den im Inhalt enthaltenen Text einschließt.

8. Elektronische Vorrichtung nach Anspruch 1, die des Weiteren einen Lautsprecher umfasst, wobei der Prozessor des Weiteren konfiguriert ist, um einen Name der vordefinierten Funktion durch den Lautsprecher auszugeben, wenn die vordefinierte Funktion ausgeführt wird.

9. Elektronische Vorrichtung nach Anspruch 1, wobei die vordefinierte Funktion das Scrollen eines Bildschirms eines aktuellen Displays einschließt.

10. Elektronische Vorrichtung nach Anspruch 1, wobei die vordefinierte Funktion das Ausführen einer Textfunktion des Textes eines aktuellen Displays einschließt.

11. Elektronische Vorrichtung nach Anspruch 1, wobei der Prozessor des Weiteren konfiguriert ist, um ein Einstellungsmenü zum Ändern einer Größe, eines Standorts und/oder einer Durchsichtigkeit des zweiten Bereichs bereitzustellen.

12. Elektronische Vorrichtung nach Anspruch 1, wobei der Prozessor des Weiteren konfiguriert ist, um ein Einstellungsmenü zum Ändern einer Art einer Eingabe bereitzustellen, die in dem zweiten Bereich erkennbar ist.

13. Elektronische Vorrichtung nach Anspruch 1, wobei die Benutzereingabe eine Berührungseingabe umfasst, und die gegebene Bedingung eine Anzahl von Berührungen und ein Muster der Berührungseingabe einschließt.

14. Verfahren zum Verarbeiten einer Benutzereingabe in einer elektronischen Vorrichtung, wobei das Verfahren Folgendes umfasst:
Ausführen einer Anwendung auf einer ersten Schicht, die einen ersten Bereich aufweist;
Einstellen einer zweiten Schicht, die einen zweiten Bereich aufweist;
Ausgeben der ersten Schicht und der zweiten Schicht auf einem Display, wobei die zweite Schicht mindestens einen Teil der ersten Schicht überlappt;
Empfangen einer Benutzereingabe in dem zweiten Bereich; und
wenn die Benutzereingabe eine gegebene Bedingung erfüllt, Ausführen einer vordefinierten Funktion entsprechend der gegebenen Bedingung,
wenn die Benutzereingabe in dem zweiten Bereich empfangen wird, und die gegebene Bedingung nicht erfüllt, Verarbeiten der Benutzereingabe in Bezug auf die Anwendung auf der ersten Schicht,
**dadurch gekennzeichnet, dass** die gegebene Bedingung auf einem Eingabemuster basiert.

## Revendications

1. Dispositif électronique comprenant :
une unité d'affichage ;
un module d'entrée configuré pour recevoir une entrée d'utilisateur ; et
un processeur configuré pour :
exécuter une application sur une première couche (170) ayant une première zone ;
définir une deuxième couche (160) ayant une deuxième zone, la deuxième couche étant au-dessus du première couche ;
sortir la première couche et la deuxième couche sur l'unité d'affichage, la deuxième couche se chevauchant au moins partiellement sur la première couche ; et
si l'entrée d'utilisateur est reçue dans la deuxième zone et satisfait à une condition donnée, exécuter une fonction prédéfinie correspondant à la condition donnée,
si l'entrée d'utilisateur est reçue dans la deuxième zone et ne satisfait pas à la condition donnée, traiter l'entrée d'utilisateur par rapport à l'application sur la première couche,
**caractérisé en ce que** la condition donnée est basée sur un motif d'entrée.

2. Dispositif électronique selon la revendication 1, où la deuxième zone a une transparence spécifiée.

3. Dispositif électronique selon la revendication 1, où le processeur est configuré en outre pour sortir un effet pour indiquer la deuxième zone sur l'unité d'affichage, si l'entrée d'utilisateur satisfait à la condition donnée.

4. Dispositif électronique selon la revendication 1, où le processeur est configuré en outre pour traiter l'entrée d'utilisateur par rapport à l'application, si l'entrée d'utilisateur se produit en dehors de la deuxième zone.

5. Dispositif électronique selon la revendication 1, où la fonction prédéfinie comprend fournir une notification sur l'un parmi une heure actuelle, une localisation du dispositif électronique, la météo, une quantité de batterie restante du dispositif électronique, un calendrier et un événement manqué.

6. Dispositif électronique selon la revendication 1, où la fonction prédéfinie comprend exécuter une fonction sur un contenu de l'application.

7. Dispositif électronique selon la revendication 6, où la fonction sur le contenu comprend exécuter une fonction de synthèse vocale sur du texte inclus dans le contenu.

8. Dispositif électronique selon la revendication 1, comprenant en outre un haut-parleur,
où le processeur est configuré en outre pour sortir un nom de la fonction prédéfinie à travers le haut-parleur lorsque la fonction prédéfinie est exécutée.

9. Dispositif électronique selon la revendication 1, où la fonction prédéfinie comprend le défilement d'un écran d'un affichage en cours.

10. Dispositif électronique selon la revendication 1, où la fonction prédéfinie comprend l'exécution d'une fonction d'édition de texte d'un affichage en cours.

11. Dispositif électronique selon la revendication 1, où le processeur est configuré en outre pour fournir un menu de réglage pour changer au moins l'un parmi une taille, un emplacement et une transparence de la deuxième zone.

12. Dispositif électronique selon la revendication 1, où le processeur est configuré en outre pour fournir un menu de réglage pour changer un type d'une entrée reconnaissable dans la deuxième zone.

13. Dispositif électronique selon la revendication 1, où l'entrée d'utilisateur comprend une entrée tactile, et la condition donnée comprend un nombre de contacts et un motif de l'entrée tactile.

14. Procédé de traitement d'une entrée d'utilisateur dans un dispositif électronique, le procédé comprenant :
exécuter une application sur une première couche ayant une première zone ;
définir une deuxième couche ayant une deuxième zone ;
sortir la première couche et la deuxième couche sur une unité d'affichage, la deuxième couche se chevauchant au moins une partie de la première couche ;
recevoir une entrée d'utilisateur dans la deuxième zone ; et
si l'entrée d'utilisateur satisfait à une condition donnée, exécuter une fonction prédéfinie correspondant à la condition donnée,
si l'entrée d'utilisateur est reçue dans la deuxième zone et ne satisfait pas à la condition donnée, traiter l'entrée d'utilisateur par rapport au application sur la première couche,
**caractérisé en ce que** la condition donnée est basée sur un motif d'entrée.
